# EUROPÄISCHE PATENTSCHRIFT

(11) **EP 1 805 437 B1**
(45) Veröffentlichungstag und Bekanntmachung des Hinweises auf die Patenterteilung: **04.12.2013**
(21) Anmeldenummer: 05804596.4
(22) Anmeldetag: 24.10.2005
(51) Int. Cl.: F16J 15/44, F16J 15/56, F04B 39/04

(54) **TROCKENLAUFENDE KOLBENSTANGENDICHTUNGSANORDNUNG UND VERFAHREN ZUM DICHTEN EINER KOLBENSTANGE MIT EINER TROCKENLAUFENDEN KOLBENSTANGENDICHTUNGSANORDNUNG**
DRY-RUNNING PISTON ROD SEALING ARRANGEMENT, AND METHOD FOR SEALING A PISTON ROD USING ONE SUCH ARRANGEMENT
DISPOSITIF DE GARNITURE DE TIGE DE PISTON FONCTIONNANT A SEC ET PROCEDE POUR RENDRE ETANCHE UNE TIGE DE PISTON AVEC UN DISPOSITIF DE GARNITURE DE TIGE DE PISTON FONCTIONNANT A SEC

(30) Priorität: 22.10.2004 EP 04405656
(43) Veröffentlichungstag der Anmeldung: 11.07.2007
(73) Patentinhaber: Burckhardt Compression AG, 8404 Winterthur (CH)
(72) Erfinder: FEISTEL, Norbert, CH-8548 Ellikon a.d. Thur (CH); SAMLAND, Georg, 78337 Oehningen (DE)
(74) Vertreter: Dr. Graf & Partner AG
(86) Internationale Anmeldenummer: PCT/EP2005/055494
(87) Internationale Veröffentlichungsnummer: WO 2006/042866

(56) Entgegenhaltungen:
- DE-A1- 3 117 603
- DE-A1- 4 107 580
- FR-A- 1 488 517
- GB-A- 1 195 908
- US-B1- 6 220 602

## Beschreibung

Die Erfindung betrifft eine trockenlaufende Kolbenstangendichtungsanordnung gemäss dem Oberbegriff von Anspruch 1. Die Erfindung betrifft weiter ein Verfahren zum Dichten einer Kolbenstange mit einer trockenlaufenden Kolbenstangendichtungsanordnung gemäss dem Oberbegriff von Anspruch 12, sowie einen Trockenlaufkompressor gemäss Anspruch 16.

Aus der Druckschrift EP 0933566 A1 ist eine trockenlaufende Kolbenstangendichtungsanordnung für einen trocken laufenden Kolbenkompressor aufweisend eine längsbewegliche Kolbenstange bekannt. Diese Trockenlaufdichtungsanordnung umfasst Dichtelemente aus einem Trockenlaufmaterial wie Kohle, Graphit oder Kunststoff. Das Dichtelement weist eine Dichtfläche auf, welche an der Kolbenstange anliegt, und derart eine bezüglich der Kolbenstange reibende Berührungsdichtung ausbildet. Diese Reibung hat einen zunehmenden Verschleiss des Dichtelementes zur Folge, wobei sich die Dichtwirkung des Dichtelementes beim Überschreiten eines maximal zulässigen Verschleisses stark reduziert, und das Dichtelement dann relativ schnell zu ersetzen ist. Die Reibung des Dichtelementes auf der Kolbenstange erzeugt zudem eine Reibungswärme welche schwierig abzuführen ist, was zur Folge hat, dass die maximal abzudichtende Druckdifferenz beziehungsweise die mittlere Kolbengeschwindigkeit beschränkt werden muss.

Die bekannten zum ölfreien Abdichten von Gasen verwendeten Kolbenstangen-Dichtsysteme, auch als Packung oder Trockenlaufdichtungsanordnung bezeichnet, unterliegen einer hohen mechanischen und thermischen Beanspruchung, was zur nachteiligen Folge hat, dass die Standzeit der Dichtelemente, die maximal abzudichtende Druckdifferenz sowie die mittlere Kolbengeschwindigkeit begrenzt ist.

Eine Dichtungsanordnung ist z.B. aus DE 41 07 580 bekannt.

Ein Verfahren insbesondere die Frequenz eines Schwingkörpers wobei bezüglich des Kolbenstange in Abhängigkeit eines Steuerwertes ansteuerbar verändert wird, ist aus DE 41 07 580 bekannt.

Es ist daher Aufgabe der vorliegenden Erfindung eine vorteilhaftere Trockenlaufdichtungsanordnung sowie ein vorteilhafteres Verfahren zum Dichten einer Kolbenstange mit einer Trockenlaufdichtung vorzuschlagen.

Diese Aufgabe wird gelöst mit einer Trockenlaufdichtungsanordnung aufweisend die Merkmale von Anspruch 1. Die Unteransprüche 2 bis 11 betreffen weitere, vorteilhaft ausgestaltete Trockenlaufdichtungsanordnungen. Die Aufgabe wird weiter gelöst mit einem Verfahren aufweisend die Merkmale von Anspruch 12. Die Unteransprüche 13 bis 15 betreffend weitere, vorteilhafte , Verfahrensschritte. Die Aufgabe wird weiter gelöst durch einen Trockenlaufkompressor gemäss Anspruch 16.

Die Aufgabe wird insbesondere gelöst mit einer trockenlaufenden Kolbenstangendichtungsanordnung zum Abdichten einer längsbeweglich gelagerten Kolbenstange, umfassend zumindest ein Dichtelement mit einer Dichtfläche, einen Aktuator, einen Sensor sowie einen Kammerring, innerhalb welchem der Dichtring angeordnet ist, wobei der Aktuator bezüglich dem Dichtelement eine derartige Wirkverbindung aufweist, dass die Dichtfläche radial zur Kolbenstange verschiebbar ist, und wobei der Aktuator in Abhängigkeit von einem vom Sensor erfassten Messwert ansteuerbar ist.

Die erfindungsgemässe Trockenlaufdichtungsanordnung weist den Vorteil auf, dass die Lage des Dichtelementes beziehungsweise dessen Dichtfläche bezüglich der Oberfläche der Kolbenstange mit Hilfe eines Aktuators ansteuerbar und somit veränderlich ist, sodass einerseits vorzugsweise vermieden wird, dass die Dichtfläche auf der Kolbenstange aufliegt, und andererseits die Spaltbreite zwischen der Dichtfläche und der Kolbenstange nachgeregelt werden kann, vorzugsweise derart, dass die Spaltbreite möglichst klein gehalten wird.

Beim erfindungsgemässen Verfahren zum Dichten der längsbeweglich gelagerten Kolbenstange wird die Lage der Dichtelemente somit in Abhängigkeit eines messbaren Wertes der trockenlaufenden Kolbenstangendichtungsanordnung, auch als Steuerwert bezeichnet, ansteuerbar verändert. Als Steuerwert ist beispielsweise die Distanz zwischen Dichtfläche und Kolbenstangenoberfläche, die Temperatur der Kolbenstange, die Leckgasmenge, die Anpresskraft des Dichtelementes auf die Kolbenstange oder die Druckdifferenz zwischen zwei Dichtelementen geeignet, wobei dieser Steuerwert mit Hilfe eines Sensors erfasst wird, dieser Steuerwert einer Regelvorrichtung zugeleitet wird, und die Regelvorrichtung den Aktuator und somit die Lage des Dichtelementes beziehungsweise die Lage dessen Dichtfläche ansteuert, bis der Steuerwert einem vorgegebenen Sollwert entspricht. Die Lage der Dichtflächen wird beispielsweise derart angesteuert, dass der Druckabfall über einem Dichtring innerhalb eines vorgegebenen Wertebereichs oder bei einem vorgegebenen Wert liegt. Die Lage der Dichtflächen kann beispielsweise auch derart angesteuert werden, dass über jedem ansteuerbaren Dichtring im Wesentlichen derselbe Druckabfall anliegt.

Vorzugsweise wird die Lage des Dichtelementes derart geregelt, dass zwischen Dichtfläche und Kolbenstange eine berührungsfreie Spaltdichtung mit geringer Spaltbreite von Bruchteilen von Millimetern aufrechterhalten wird, beispielsweise eine Spaltbreite im Bereich zwischen 0 und 0.3 mm. Die Dichtelemente könnten auch derart angesteuert werden, dass sich eine Spaltbreite von Null ergibt, indem die Dichtfläche des Dichtelementes ohne oder mit vernachlässigbar kleiner Anpresskraft auf der Kolbenstange aufliegt. Da das Dichtelement die Kolbenstange nicht oder kaum berührt weist das Dichtelement keinen oder einen nur äusserst geringen Verschleiss auf, sodass die Dichtelemente selten ersetzt werden müssen und die Trockenlaufdichtungsanordnung während langer Zeit wartungsfrei betreibbar ist. Die erfindungsgemässe Trockenlaufdichtungsanordnung weist den Vorteil auf, dass die Druckdifferenz über vorzugsweise jedem Dichtelement ansteuerbar ist. Somit kann insbesondere vermieden werden, dass über einem oder über wenigen Dichtelementen ein übermässig hoher Differenzdruck mit entsprechend hohem Verschleiss anliegt. Es hat sich gezeigt, dass sich bei nicht ansteuerbaren Dichtelementen oft ein bestimmtes Dichtelement übermässig verschleisst und dadurch funktionsuntüchtig wird, wodurch ein weiteres Dichtelement einem übermässigen Verschleiss ausgesetzt wird, sodass durch diese sich ergebende Kettenreaktion relativ bald die gesamte Trockenlaufdichtungsanordnung unbrauchbar ist. Die erfindungsgemässe Anordnung verhindert eine derartige, unkontrollierte Kettenreaktion bei entlang der Kolbenstange nacheinander folgend angeordneten Dichtelementen.

Die erfindungsgemässe Trockenlaufdichtungsanordnung weist den weiteren Vorteil auf, dass die Dichtfläche des Dichtelementes die Oberfläche der sich bewegenden Kolbenstange nicht oder kaum berührt, sodass dadurch keine oder nur eine geringe Reibungswärme entsteht.

Die erfindungsgemässe Trockenlaufdichtungsanordnung weist somit eine hohe Standzeit bei geringer Leckage auf, und ist insbesondere auch für hohe Druckdifferenzen und/ oder hohe mittlere Kolbenstangen- beziehungsweise Kolbengeschwindigkeiten geeignet. Die erfindungsgemässe Trockenlaufdichtungsanordnung erlaubt somit einen Trockenlaufkompressor mit hoher Förderleistung zu bilden. Zudem ist die erfindungsgemässe Trockenlaufdichtungsanordnung auch zum Abdichten von Gasen mit niedrigem Molekulargewicht wie beispielsweise Wasserstoff geeignet.

Die Erfindung wird nachfolgend mit Hilfe von Figuren beschrieben. Es zeigen:
- Fig. 1: eine Kolbenstangendichtung eines trocken laufenden Kolbenkompressors;
- Fig. 2: eine Teilansicht eines Längsschnittes einer Trockenlaufdichtungsanordnung;
- Fig. 2a: eine Frontansicht eines segmentierten Dichtrings aus Richtung C;
- Fig. 2b: eine Frontansicht eines passiven Deckrings aus Richtung C;
- Fig. 2c: eine Teilansicht eines Längsschnittes einer weiteren Ausführungsform Trockenlaufdichtungsanordnung;
- Fig. 2d: eine Frontansicht eines Stützringes aus Richtung C;
- Fig. 2e: eine Frontansicht einer weiteren Ausführungsform eines segmentierten Dichtrings aus Richtung C;
- Fig. 3: eine Teilansicht eines weiteren Längsschnittes einer Trockenlaufdichtungsanordnung;
- Fig. 3a: eine Frontansicht eines segmentierten Dichtrings aus Richtung D;
- Fig. 4a: eine Frontansicht eines weiteren segmentierten Dichtringes;
- Fig. 4b: eine Frontansicht eines weiteren segmentierten Dichtringes;
- Fig. 5a: eine Frontansicht eines weiteren segmentierten Dichtringes;
- Fig. 5b: eine Detailansicht der Überlappungsstelle des Dichtringes gemäss Fig. 5a;
- Fig. 5c: der Dichtring gemäss Fig. 5a mit elastischem Deckring;
- Fig. 5d: der Dichtring gemäss Fig. 5c aus Richtung C;
- Fig. 6: eine Teilansicht eines weiteren Längsschnittes einer Trockenlaufdichtungsanordnung;
- Fig. 7: eine Ansicht eines einstückigen Dichtringes;
- Fig. 7a: eine Detailansicht der Überlappungsstelle des Dichtringes gemäss Fig. 7.

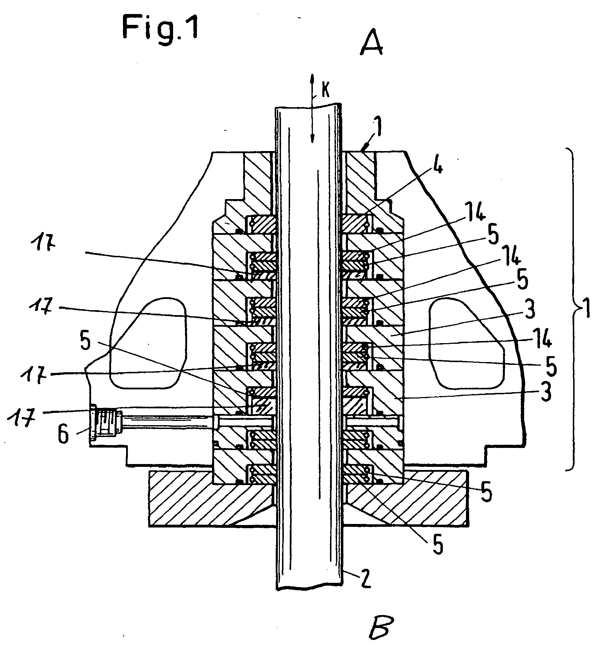

Figur 1 zeigt eine trockenlaufende Kolbenstangendichtungsanordnung 1 eines trocken laufenden Kolbenkompressors mit einer Kolbenstange 2, welche in Bewegungsrichtung K längsbeweglich gelagert ist, wobei sich in eingebautem Zustand auf der Seite A der Zylinder und auf der Seite B der Kolbenstangenantrieb befindet. Die Trockenlaufdichtungsanordnung 1 ist als eine, eine Packung aufweisende Kolbenstangendichtung 1 ausgestaltet, wobei die Packung eine Mehrzahl hintereinander angeordneter Kammerringe 3 mit darin angeordneten Dichtringen 5 umfasst. Die Trockenlaufdichtungsanordnung 1 umfasst einen Drosselring 4 sowie mehrere Dichtringe 5. In einer vorteilhaften Ausgestaltung sind, wie mit den oberen drei Kammerringen 3 dargestellt, jeweils ein Deckring 14, ein Dichtring 5 sowie ein Stützring 17 in Verlaufsrichtung der Kolbenstange 2 nebeneinander liegend angeordnet. Innerhalb des Kammerrings 3 kann jedoch auch, wie in einem Kammerring 3 dargestellt, nur ein einziger Dichtring 5 angeordnet sein. Die Kolbenstange 2 bewegt sich in Richtung K hin und her. Die Kolbenstangendichtung 1 umfasst vorzugsweise zudem einen Leckgasabzug 6.

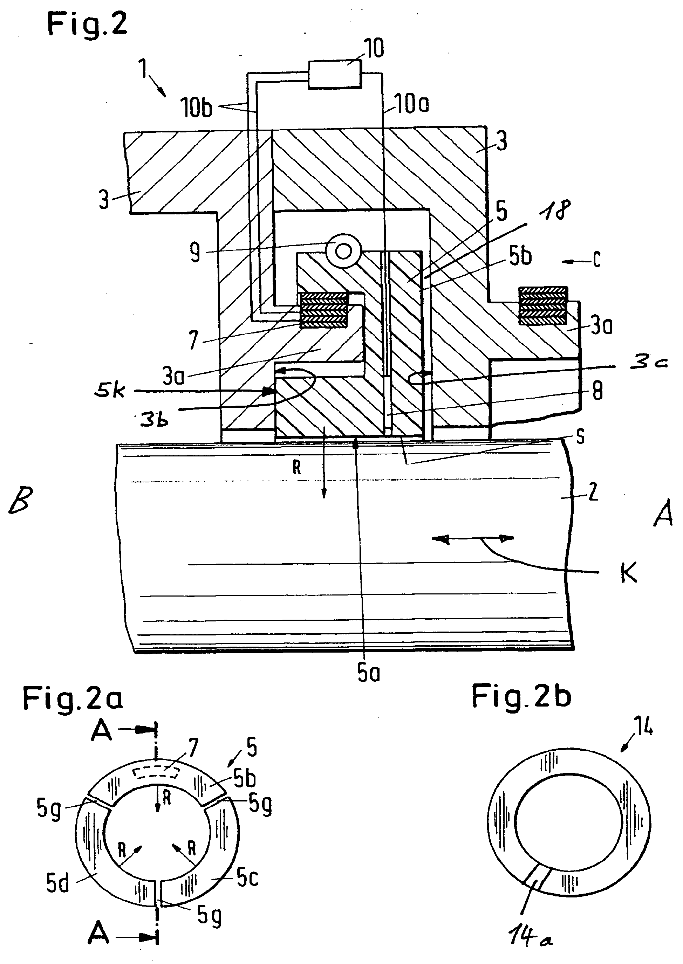

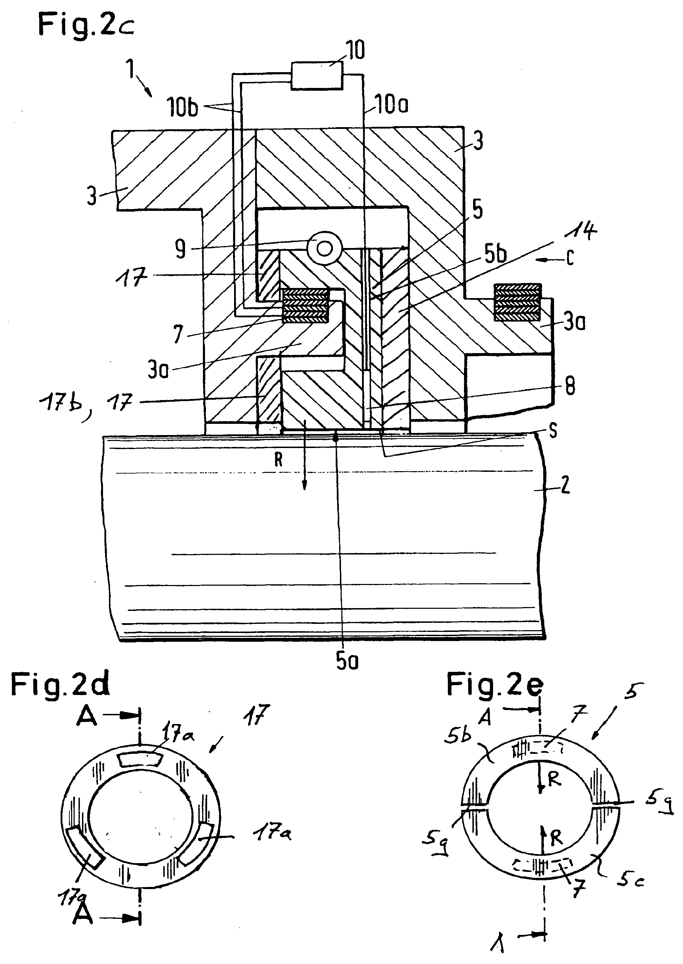

Figur 2 zeigt in einem Längsschnitt zwei Kammerringe 3 sowie einen Dichtring 5 der erfindungsgemässen Trockenlaufdichtungsanordnung 1. Die gesamte Trockenlaufdichtungsanordnung 1 umfasst, wie in Figur 1 dargestellt, vorzugsweise eine Mehrzahl in Verlaufsrichtung der Kolbenstange 2 hintereinander angeordneter Kammerringe 3 mit Dichtringen 5. Der in Figur 2 dargestellte Kammerring 3 weist ein vorstehendes, ringförmiges Kammerringteil 3a auf, an welchem ein piezoelektrischer Aktuator-7 befestigt ist. Der Kammerring 3 umfasst zudem zwei senkrecht zur Längsrichtung der Kolbenstange 2 verlaufende Auflageflächen 3b, 3c. Der Dichtring 5 ist in Figur 2a in einer Aufsicht aus Richtung C dargestellt. Der Dichtring 5 besteht aus drei identisch ausgestalteten Dichtringsegmenten 5b,5c,5d, welche beim Spalt 5g geringfügig beabstandet sind. Der Spalt 5g weist beispielsweise eine Breite im Bereich von 0.1 mm bis 0.5 mm auf. In Figur 2a ist der dem Dichtringsegment 5b zugeordnete Aktuator 7 strichlichert dargestellt. Der Aktuator 7 befindet sich, aus Richtung C gesehen, hinter dem Dichtringsegment 5b. Analog dazu ist auch den Dichtringsegmenten 5c, 5d ein Aktuator 7 zugeordnet, welcher jedoch nicht dargestellt ist. Jedes Dichtringsegment 5b,5c,5d, weist somit einen eigenen Aktuator 7 auf, wobei der Spalt 5g derart breit ausgestaltet ist, dass die Dichtringsegmente 5b,5c,5d zumindest in bezüglich der Kolbenstange 2 radialer Richtung R verschiebbar sind. Figur 2 zeigt einen Schnitt des Dichtringsegmentes 5b entlang der Linie A-A. Der Dichtring 5 beziehungsweise dessen Dichtringsegmente 5b,5c,5d weist eine gegen die Kolbenstange 2 hin orientierte Dichtfläche 5a auf. Der in Figur 2 dargestellte Dichtring 5 ist von einer Feder 9 umgeben, sodass die Dichtringsegmente 5b,5c,5d unter Ausbildung des gesamten Dichtringes 5 zusammengehalten werden. Am Kammerringteil 3a sind in Umfangsrichtung gleichmässig beabstandet drei Aktuatoren 7 befestigt, wobei jedes Dichtringsegment 5b,5c,5d mit je einem Aktuator 7 verbunden ist, sodass jedes Dichtringsegment 5b,5c,5d von je einem Aktuator 7 ansteuerbar in der radialen Richtung R verschiebbar gelagert ist. Im dargestellten Ausführungsbeispiel ist innerhalb zumindest eines der Dichtringsegmente 5b ein Sensor 8 angeordnet, welcher die Distanz zur Oberfläche der Kolbenstange 2 erfasst. Der Sensor 8 sowie der Aktuator 7 sind über elektrische Leitungen 10a mit einer Regelvorrichtung 10 verbunden. Im dargestellten Ausführungsbeispiel bestimmt die Regelvorrichtung 10 mit Hilfe des Sensors 8 den Abstand zwischen der Oberfläche der Kolbenstange 2 und vorzugsweise der Dichtfläche 5a, wobei die Regelvorrichtung 10 den Aktuator 7 derart und das mit diesem verbundene Dichtringsegment 5b,5c,5d derart ansteuert, dass die Spaltbreite S einen der Regelvorrichtung 10 vorgegebenen Sollwert einnimmt. Vorzugsweise ist jedes Dichtringelement 5b, 5c, 5d mit einem separaten Aktuator 7 verbunden, sodass die Regelvorrichtung 10 pro Dichtring 5 drei Aktuatoren 7 ansteuert.

Der in Figur 2 dargestellte Schnitt des Dichtringsegmentes 5b zeigt auch, dass vorzugsweise jedes Dichtringsegment 5b,5c,5d eine Stirnfläche 5k aufweist, welche vorzugsweise wie dargestellt in Längsrichtung der Kolbenstange 2 vorsteht, und einen gegenüber der Auflagefläche 3b angepassten Verlauf aufweist. Im dargestellten Ausführungsbeispiel verlaufen die Stirnfläche 5k sowie die Auflagefläche 3b senkrecht zur Längsrichtung der Kolbenstange 2. Die Auflagefläche 3b sowie die Stirnfläche 5k könnten bezüglich der Längsrichtung der Kolbenstange 2 auch geneigt verlaufen. Während der Kompressionsbewegung der Kolbenstange beziehungsweise des nicht dargestellten Kolbens entsteht auf der mit A bezeichneten Seite ein hoher Druck. Die Auflagefläche 3b und die Stirnfläche 5k weisen die Vorteile auf, dass alle Dichtringsegmente 5b,5c,5d zumindest mit deren Stirnfläche 5k an der Auflagefläche 3b anliegen und somit seitlich gestützt sind, und dass in radialer Richtung verlaufende Spalt 5g zu einem grossen Teil durch die Auflagefläche 3b abgedeckt ist, was die Leckage in Verlaufsrichtung der Kolbenstange 2 verringert. Die seitliche Stützung ist insbesondere wichtig um den Dichtring 5 in einer definierten Position zu halten, da während dem Betrieb des Kolbenkompressors innerhalb der Kolbenstangendichtungsanordnung ein oszillierender, dynamischer Druckverlauf entsteht, mit erheblichen Druckschwankungen, welche am Dichtring 5 angreifen.

Der Dichtring 5 kann derart angeordnet und ausgestaltet sein, dass sich zwischen dem Dichtring 5 und dem Kammerring 3 ein Spalt 18 ergibt, welcher während einer Saugphase des Kolbenkompressors ein Rückströmen des Fluides in Richtung A erlaubt.

In einer vorteilhaften Ausgestaltung liegt der während der Kompressionsphase über einem Dichtring 5 anliegende Druck im Bereich zwischen 50 und 75 Bar. Werden zwei Kammerringe 3 mit darin angeordneten Dichtringen 5 in Verlaufsrichtung der Längsachse der Kolbenstange 2 nacheinander angeordnet, so beträgt der maximale Druck dieser beispielhaften Kolbenstangendichtungsanordnung 1 zwischen 100 und 150 Bar, beziehungsweise beträgt der gesamte maximale Druck bei der Verwendung von vier Kammerringen 3 mit je einem Dichtring 5 zwischen 200 und 300 Bar.

Figur 2b zeigt einen passiven, das heisst nicht aktiv betätigbaren Deckring 14. Wie in Figur 1 dargestellt, ist der Deckring 14 neben dem Dichtring 5 angeordnet. Im Beispiel gemäss Figur 2 würde der Deckring 14 rechts neben dem Dichtring 5 angeordnet sein, wobei der Innenraum des Kammerrings 3 dann natürlich entsprechend gross ausgestaltet sein müsste. Der Deckring 14 bedeckt die radialen Spalten 5g und verhindert somit einen Gasdurchtritt in Verlaufsrichtung K der Kolbenstange 2. Um einen Verschleiss dieses passiven Dichtrings 14 zu vermeiden ist dessen Innendurchmesser derart gross ausgestaltet, dass sich keine Berührung zur Kolbenstange 2 ergibt. Der Deckring 14 kann in einer bevorzugten Ausgestaltung eine Rückströmnut 14a aufweisen, wobei der Deckring 14 derart anzuordnen ist, dass die Rückströmnut 14a zur Seite A hin ausgerichtet ist.

Figur 2c zeigt in einem Längsschnitt ein weiteres Ausführungsbeispiel einer Trockenlaufdichtungsanordnung, welche, im Unterschied zum Ausführungsbeispiel gemäss Figur 2, einen Dreckring 14, und einen Stützring 17 umfasst. Der Stützring 17 dient als Stütze des Dichtringes 5 in Richtung der Längsachse der Kolbenstange 2, wobei der Stützring 17, wie in der Draufsicht gemäss Figur 2d dargestellt, Durchbrechungen 17a aufweist, durch welche die vorstehenden Kammerringteile 3a verlaufen.

Der Stützring 17 könnte auch derart ausgestaltet sein, dass dieser nur die in Figur 2c mit 17b bezeichnete Kreisscheibe umfasst, welche mit deren Umfangsfläche teilweise am vorstehenden Kammerringteil 3a anliegt.

Der Dichtring 5 könnte auch, wie in einer Draufsicht in Figur 2e dargestellt, nur aus zwei Dichtringsegmenten 5b, 5c bestehen, welche über je einen Aktuator 7 in radialer Richtung R verschiebbar gelagert sind.

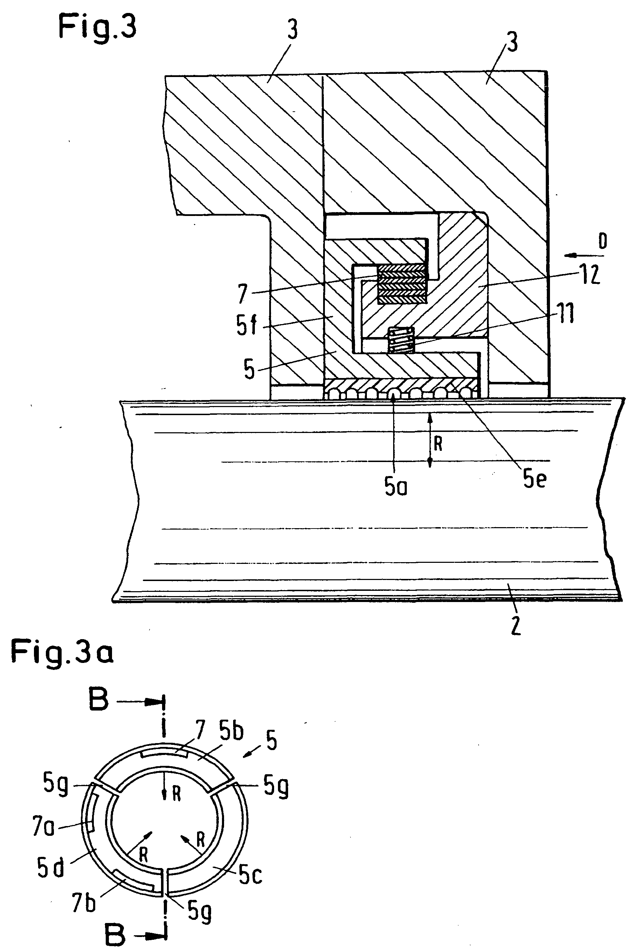

Figur 3 zeigt in einer Teilansicht einen weiteren Längsschnitt durch ein Ausführungsbeispiel eines Kammerrings 3 mit Dichtring 5, wobei der Sensor 8 sowie die Regelvorrichtung 10 nicht dargestellt sind. Im Innenraum des Kammerrings 3 ist eine ringförmige Halterung 12 angeordnet, mit welcher der piezoelektrische Aktuator 7 sowie eine Feder 11 verbunden ist. Der Dichtring 5 ist nun derart ausgestaltet, dass dieser sowohl auf dem Aktuator 7 als auch auf der Feder 11 aufliegt. Der Aktuator 7 ist wiederum derart betätigbar, dass der Dichtring 5 und somit die Dichtfläche 5a in zur Kolbenstange 2 radialen Richtung R verschiebbar gelagert ist. Das in Figur 3 dargestellte Ausführungsbeispiel des Dichtringes 5 weist zur Kolbenstange 2 hin eine Dichtschicht 5e mit Labyrinthrillen auf, sodass sich eine Labyrinthrillen aufweisende Dichtfläche 5a ergibt. Der Aktuator 7 wird vorzugsweise derart angesteuert, dass zwischen der Oberfläche der Kolbenstange 2 und der Dichtfläche 5a ständig ein kleiner Spalt besteht, sodass sich eine Spaltdichtung ergibt, wobei die Labyrinthrillen die Dichtwirkung zusätzlich erhöhen. Der gesamte Dichtring 5 könnte aus demselben Material bestehen. Der Dichtring 5 kann auch, wie in Figur 3 dargestellt, aus einem Grundring 5f sowie einer Dichtschicht 5e bestehen, wobei diese aus einem bezüglich dem Grundring 5f unterschiedlichen Material bestehen kann. Der Grundring 5f könnte beispielsweise aus einem Metall und die Dichtschicht 5e aus einem trockenlauffähigen Material wie Kunststoff oder Keramik bestehen.

Die Figur 3a zeigt eine Frontansicht des in Figur 3 dargestellten Dichtringes 5 aus Richtung D. Der Dichtring 5 ist als segmentierter Dichtring mit radialen Spalten 5g und umfassend drei Dichtringsegmente 5b,5c,5d ausgestaltet. Figur 3 zeigt einen Schnitt durch den Dichtring gemäss Figur 3a entlang der Linie B-B. Beim Dichtringsegment 5b ist der Aktuator 7 schematisch dargestellt. Vorzugsweise weist jedes Dichtringsegment 5b,5c,5d einen derartig angeordneten Aktuator 7 auf. In einer weiteren Ausführungsform könnten jedem Dichtringsegment, wie beim Richtringsegment 5d dargestellt, zwei Aktuatoren 7a,7b zugeordnet sein, welche gemeinsam derart auf das Dichtringsegment 5d einwirken, dass dieses in Richtung R verschiebbar ist.

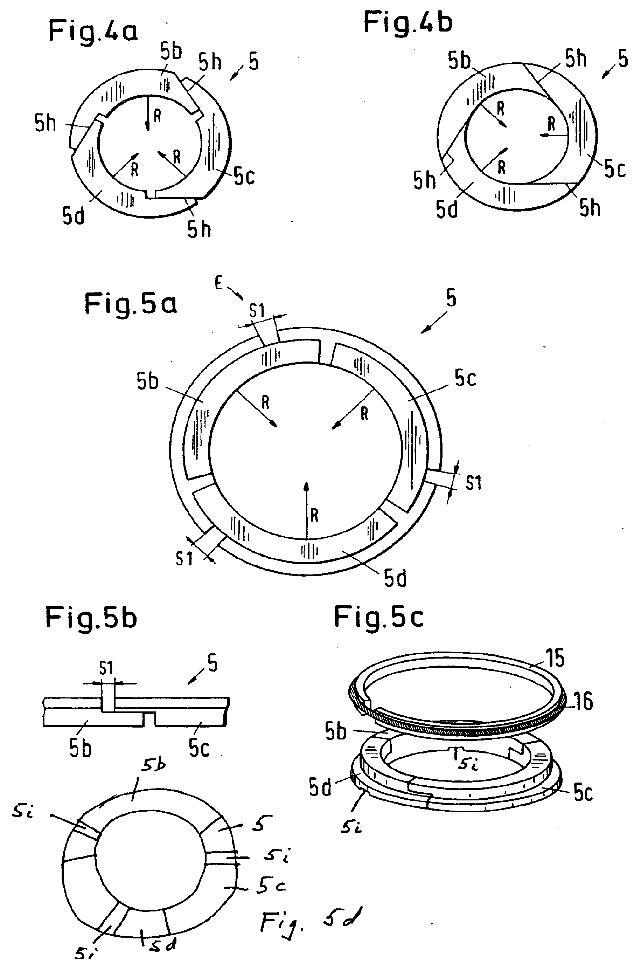

In Kombination mit der erfindungsgemässen Trockenlaufdichtungsanordnung 1 lassen sich unterschiedlich ausgestaltete Dichtringe 5 verwenden. Die Figuren 4a, 4b und 5a zeigen je eine Frontansicht unterschiedlich ausgestalteter Dichtringe 5, wobei sich die Angriffspunkte für die Aktuatoren 7 , wie auch in Figur 2a dargestellt, auf der Rückseite der Dichtringsegmente 5b,5c,5d befinden und daher in der dargestellten Ansicht nicht direkt sichtbar sind.
Der Dichtring 5 gemäss Figur 4a weist Schnitte 5h auf, entlang welchen die Dichtringsegmente 5b,5c,5d verschiebbar gelagert sind, um diese in Richtung R zu bewegen.
Der Dichtring gemäss Figur 4b weist bezüglich der Kolbenstange 2 tangential verlaufende Schnitte 5h auf. Die Dichtringsegmente 5b,5c,5d sind vorzugsweise parallel zum Verlauf der Schnitte 5h in Richtung R verschiebbar. Die beiden in Figur 4a und 4b dargestellten Dichtringe 5 werden vorzugsweise in Kombination mit einem Deckring 14 verwendet.

Der Dichtring 5 gemäss Figur 5a besteht aus drei Dichtringsegmenten 5b,5c,5d, welche, wie in Figur 5b dargestellt, je eine in Umfangsrichtung überlappende Stossstelle S1 aufweisen. Jedes Dichtringsegment 5b,5c,5d ist, beispielsweise wie in Figur 2 oder Figur 3 dargestellt, über einen Aktuator 7 mit dem jeweiligen Kammerring 3 verbunden und in radialer Richtung R verschiebbar. Es kann sich als vorteilhaft erweisen den Dichtring 5, wie in Figur 5c dargestellt, mit einem umlaufenden elastischen Dichtring 15 zu versehen, welcher die Stossstellen in radialer Richtung abdichtet. Für diese Anordnung ist, wie in Figur 1 mit dem einzeln im Kammerring 3 angeordneten Dichtring 4 dargestellt, kein zusätzlicher, daneben angeordneter Deckring 14 erforderlich. Der Dichtring 15 kann wie dargestellt von einer elastischen Feder 16 umgeben sein. Der Dichtring 5 kann, wie in Figur 5c und 5d dargestellt, in radialer Richtung verlaufende Rückströmnuten 5i aufweisen, wobei der Dichtring 5 derart angeordnet ist, dass die Rückströmnuten 5i, zu der in Figur 2 dargestellten Seite A hin weisen.

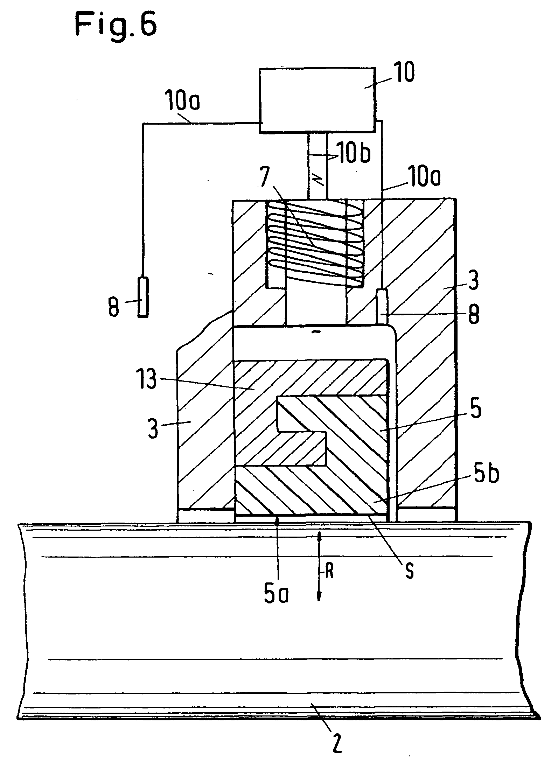

Figur 6 zeigt in einer Teilansicht einen weiteren Längsschnitt durch ein Ausführungsbeispiel eines Kammerrings 3 mit Dichtring 5 und einem im Kammerring 3 angeordneten Sensor 8, welcher den Druck innerhalb des Kammerrings 3 erfasst. Im Kammerring 3 ist ein als Elektromagnet mit Spule ausgestalteter Aktuator 7 angeordnet. Der Dichtring 5 ist, ähnlich wie in Figur 2a dargestellt, als segmentierter Ring bestehend aus drei Dichtringsegmenten 5b, 5c, 5d ausgestaltet. Jedes Dichtringsegment 5b,5c,5d ist mit einer metallischen, magnetisierbaren Halterung 13 verbunden. Durch ein Betätigen des Aktuators 7 wird jedes Dichtringsegment individuell in radialer Richtung R verschoben, sodass die Spaltbreite S einstellbar ist. Figur 6 zeigt links einen weiteren Sensor 8, welcher im linken, nur andeutungsweise dargestellten Kammerring 3 angeordnet ist. Beide Sensoren 8 sowie die Aktuatoren 7 sind über die Leitungen 10a, 10b mit der Regelvorrichtung 10 verbunden. Im dargestellten Ausführungsbeispiel wird als Steuerwert mit Hilfe der Sensoren 8 der Druck in den Kammerringen 3 erfasst, und die Lage der Dichtringsegmente 5b, 5c, 5d beispielsweise derart angesteuert, dass sich in benachbarten Kammerringen 3 eine vorgegebene Solldruckdifferenz einstellt oder eine vorgegebene Solldruckdifferenz nicht überschritten wird. -

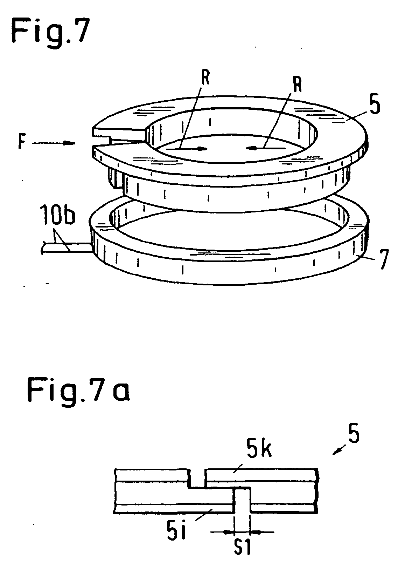

Figur 7 zeigt einen einstückigen Dichtring 5 mit überlappenden Stössen 5i, 5k. Figur 7a zeigt diese Stösse 5i, 5k sowie den Spalt S1 in einer Seitenansicht aus Blickrichtung F. Der Dichtring 5 ist von einem ring- oder rohrförmigen Aktuator 7 umschlossen, dessen Umfangslänge ansteuerbar verlängerbar beziehungsweise verkürzbar ist, beispielsweise piezoelektrisch, sodass die Dichtfläche 5a des Dichtringes 5 wiederum eine Verschiebung in zur Kolbenstange 2 radialen Richtung R erfährt, sodass auch die Spaltbreite S ansteuerbar und veränderbar ist. Die elektrischen Leitungen 10b dienen zur Ansteuerung des piezoelektrischen Aktuators 7.

Vorzugsweise weisen alle Dichtringe 5 der Trockenlaufdichtungsanordnung 1 je zumindest einen Aktuator 7 auf. Falls der Dichtring 5 aus Dichtringsegmenten 5b, 5c, 5d besteht weist jeder Dichtring 5 vorzugsweise für jedes Dichtringsegment 5b,5c,5d einen eigenen Aktuator 7 auf. Die Regelvorrichtung 10 steuert vorzugsweise alle Aktuatoren 7 der Trockenlaufdichtungsanordnung 1 an, wobei die Regelvorrichtung 10 die Werte einer Mehrzahl von in der Trockenlaufdichtungsanordnung 1 angeordneten Sensoren 8 erfasst.

Die Aktuatoren 7 könnten, nebst den dargestellten, mit elektrischer Energie arbeitenden Ausführungsformen, auch derart ausgestaltet sein, dass diese mit Strömungsenergie, beispielsweise pneumatisch oder hydraulisch betreibbar sind, um eine Hubbewegung zu erzeugen. Der Stellweg beziehungsweise der vom Aktuator 7 zu bewirkende Verschiebeweg in radialer Richtung R liegt üblicherweise im Bereich von einigen Zehntelsmillimetern bis etwa ein Millimeter.

Als Sensoren 8 sind eine Vielzahl von Sensoren geeignet. Zur Messung des Abstandes zwischen Kolbenstange 2 und Dichtringsegment 5b,5c,5d ist beispielsweise ein induktiver Wegaufnehmer geeignet.

Die Kolbenstangentemperatur dient als Indikator der vom Dichtsystem erzeugten Reibwärme. In einem möglichen Regelungsverfahren wird beim Anstieg der Kolbenstangentemperatur der Abstand zwischen dem Dichtring 6 und der Kolbenstange 2 geringfügig erhöht, bis die Temperatur wieder sinkt. Die Messung der Kolbenstangentemperatur kann beispielsweise durch eine Berührungsmessung mittels eines Gleitschuhs, vorzugsweise jedoch berührungsfrei, beispielsweise mit einem Infrarotsensor oder mit einem auf der Kolbenstange 2 angeordneten Sensor, dessen Werte berührungslos übertragen werden. Es kann sich auch als vorteilhaft erweisen am Leckgasabzug 6 den Massenstrom zu messen, beispielsweise mit einem thermischen Massenstromgeber. Die Aktuatoren 7 könnten beispielsweise derart angesteuert werden, dass am Leckgasabzug eine Mindestmenge Gas nicht unterschritten wird. Im Gegensatz zu dem in Figur 2b dargestellten, passiven Deckring 14, könnte der Deckring 14 auch als aktiv ansteuerbarer Deckring 14 ausgestaltet sein, beispielsweise gleich wie der in Figur 3a dargestellte Dichtring 5. Somit könnte ein Dichtring 5 und ein ansteuerbarer Deckring 14 gemeinsam in einem Kammerring 3 nebeneinander liegend angeordnet sein, indem beispielsweise die in Figur 2 und Figur 3 dargestellten Anordnungen zur Ansteuerung je eines Dichtringes 5 gemeinsam innerhalb eines Kammerrings 3 angeordnet werden, wobei der in Figur 3 dargestellte Dichtring 5 die Funktion eines Deckringes 14 ausübt, indem dieser derart angeordnet ist, dass die Stösse 5g des Dichtringes 5 abgedeckt werden, sodass Dicht- und Deckring 5, 14 nebeneinander liegen und individuell über den jeweiligen Aktuator 7 ansteuerbar sind.

In einem vorteilhaften Betriebsverfahren könnte der Dichtring 5 in einer ersten Betriebsphase derart angesteuert werden, dass die Dichtflächen 5a an der Kolbenstange 2 anliegen, damit sich die Dichtflächen 5a an der Kolbenstange 2 verschleissen und dadurch die Form der Kolbenstange 2 annehmen. In einer zweiten Betriebsphase könnte der Dichtring 5 derart angesteuert werden, dass zwischen den Dichtflächen 5a und der Kolbenstange 2 ein vordefinierter Spalt besteht. Da in der zweiten Betriebsphase der Verlauf der Dichtflächen 5a dem Verlauf der Kolbenstange 2 angepasst ist, kann der vordefinierte Spalt sehr gering gehalten werden, sodass sich in Längsachse der Kolbenstange 2 eine geringe Leckage ergibt.

## Patentansprüche

1. Trockenlaufende Kolbenstangendichtungsanordnung (1) zum Abdichten einer längsbeweglich gelagerten Kolbenstange (2), umfassend zumindest einen Dichtring (5) mit einer Dichtfläche (5a), einen Aktuator, (7) einen Sensor (8) sowie einen Kammerring (3), innerhalb welchem der Dichtring (5) angeordnet ist, wobei der Aktuator (7) bezüglich dem Dichtring (5) eine derartige Wirkverbindung aufweist, dass die Dichtfläche (5a) radial zur Kolbenstange (2) verschiebbar ist, und wobei der Aktuator (7) in Abhängigkeit von einem vom Sensor (8) erfassten Messwert ansteuerbar ist.

2. Kolbenstangendichtungsanordnung nach Anspruch 1, **dadurch gekennzeichnet, dass** in Längsrichtung der Kolbenstange (2) eine Mehrzahl von Kammerringen (3) angeordnet sind, wobei innerhalb von zumindest zwei Kammerringen (3) ein Dichtring (5) und ein Aktuator (7) angeordnet sind.

3. Kolbenstangendichtungsanordnung nach Anspruch 1 oder 2, **dadurch gekennzeichnet, dass** der Kammerring (3) eine senkrecht zur Längsrichtung der Kolbenstange (2) verlaufende Auflagefläche (3b,3c) aufweist.

4. Kolbenstangendichtungsanordnung nach einem der vorhergehenden Ansprüche, **dadurch gekennzeichnet, dass** der Dichtring (5) als segmentierter Dichtring (5) umfassend eine Mehrzahl von Dichtringsegmenten (5b,5c,5d) ausgestaltet ist.

5. Kolbenstangendichtungsanordnung nach Anspruch 4, **dadurch gekennzeichnet, dass** jedem Dichtungsringsegment (5a,5b,5c) zumindest ein separater Aktuator (7) zugeordnet ist.

6. Kolbenstangendichtungsanordnung nach einem der Ansprüche 1 bis 3, **dadurch gekennzeichnet, dass** der Dichtring (5) einstückig ausgestaltet ist.

7. Kolbenstangendichtungsanordnung nach Anspruch 6, **dadurch gekennzeichnet, dass** ein ring- oder rohrförmiger Aktuator (7) den Dichtring (5) in Umfangsrichtung umschliesst.

8. Kolbenstangendichtungsanordnung nach einem der vorhergehenden Ansprüche, **dadurch gekennzeichnet, dass** der Aktuator (7) als piezoelektrisches oder magnetostriktives Element ausgestaltet ist.

9. Kolbenstangendichtungsanordnung nach einem der Ansprüche 1 bis 7, **dadurch gekennzeichnet, dass** der Aktuator (7) mittels eines Fluides antreibbar ist.

10. Kolbenstangendichtungsanordnung nach einem der vorhergehenden Ansprüche, **dadurch gekennzeichnet, dass** der Sensor (8) am Dichtring (5) befestigt ist.

11. Kolbenstangendichtungsanordnung nach einem der vorhergehenden Ansprüche, **dadurch gekennzeichnet, dass** die Dichtfläche (5a) Labyrinthrillen aufweist.

12. Verfahren zum Dichten einer längsbeweglich gelagerten Kolbenstange (2) mit einer trockenlaufenden Kolbenstangendichtungsanordnung (1) umfassend einen Dichtring (5) mit einer Dichtfläche (5a), wobei die Lage der Dichtfläche (5a) bezüglich der Kolbenstange (2) in Abhängigkeit eines Steuerwertes ansteuerbar verändert wird, wobei als Steuerwert der Abstand des Dichtringes (5) von der Kolbenstange (2) und/oder die Temperatur der Kolbenstange (2) und/oder der Differenzdruck zwischen zwei Dichtringen (5) verwendet wird.

13. Verfahren nach Anspruch 12, **dadurch gekennzeichnet, dass** zumindest zwei und vorzugsweise alle Dichtringe (5) derart angesteuert werden, dass die Lage deren Dichtflächen (5a) bezüglich der Kolbenstange (2) veränderbar ist.

14. Verfahren nach einem der Ansprüche 12 bis 13, **dadurch gekennzeichnet, dass** die Lage der Dichtflächen (5a) von zwei in Längsrichtung der Kolbenstange (2) beabstandet angeordneten Dichtringen (5) derart angesteuert wird, dass der Druckabfall über einem Dichtring (5) innerhalb eines vorgegebenen Wertebereichs liegt.

15. Verfahren nach Anspruch 14, **dadurch gekennzeichnet, dass** die Lage der Dichtflächen (5a) derart angesteuert wird, dass über jedem ansteuerbaren Dichtring (5) im Wesentlichen derselbe Druckabfall entsteht.

16. Trockenlaufkompressor umfassend eine Kolbenstangendichtungsanordnung (1) nach einem der Ansprüche 1 bis 11 oder betrieben mit einem Verfahren nach einem der Ansprüche 12 bis 15.

## Claims

1. Dry running piston rod sealing arrangement (1) for the sealing of a longitudinal movably supported piston rod (2) comprising at least one sealing ring (5) having a sealing surface (5a), an actuator (7), a sensor (8) and also a chamber ring (3) within which the sealing ring (5) is arranged, with the actuator (7) having an operative connection with respect to the sealing ring (5) such that the sealing surface (5a) can be radially displaced relative to the piston rod (2), and wherein the actuator (7) can be controlled in dependence on a measured value detected by the sensor (8).

2. Piston rod sealing arrangement in accordance with claim 1, **characterized in that** a plurality of chamber rings (3) are arranged in the longitudinal direction of the piston rod (2) with a sealing ring (5) and an actuator (7) being arranged within at least two chamber rings (3).

3. Piston rod sealing arrangement in accordance with claim 1 or claim 2, **characterized in that** the chamber ring (3) has a support surface (3b, 3c) extending perpendicular to the longitudinal direction of the piston rod (2).

4. Piston rod sealing arrangement in accordance with any one of the preceding claims, **characterized in that** the sealing ring (5) is formed as a segmented sealing ring (5) comprising a plurality of sealing ring segments (5b, 5c, 5d).

5. Piston rod sealing arrangement in accordance with claim 4, **characterized in that** at least one separate actuator (7) is associated with each sealing ring segment (5a, 5b, 5c).

6. Piston rod sealing arrangement in accordance with any one of the claims 1 to 3, **characterized in that** the sealing ring (5) is made in one piece.

7. Piston rod sealing arrangement in accordance with claim 6, **characterized in that** a ring-like or tube-like actuator (7) surrounds the sealing ring (5) in the peripheral direction.

8. Piston rod sealing arrangement in accordance with any one of the preceding claims, **characterized in that** the actuator (7) is designed as a piece of piezoelectric element or magnetostrictive element.

9. Piston rod sealing arrangement in accordance with any one of the claims 1 to 7, **characterized in that** the actuator (7) can be driven by means of a fluid.

10. Piston rod sealing arrangement in accordance with one of the preceding claims, **characterized in that** the sensor (8) is secured to the sealing ring (5).

11. Piston rod sealing arrangement in accordance with one of the preceding claims, **characterized in that** the sealing surface (5a) has labyrinth grooves.

12. Method for the sealing of a longitudinal movably supported piston rod (2) having a dry running piston rod sealing arrangement (1) comprising a sealing ring (5) with a sealing surface (5a), wherein the position of the sealing surface (5a) with respect to the piston rod (2) can be controllably changed in dependence on a control value, wherein the spacing of the sealing ring (5) from the piston rod (2) and/or the temperature of the piston rod (2) and/or the pressure difference between two sealing rings (5) is used as the control value.

13. Method in accordance with claim 12, **characterized in that** at least two and preferably all sealing rings (5) can be controlled in such a way that the position of the sealing surfaces (5a) with respect to the piston rod (2) can be changed.

14. Method in accordance with one of the claims 12 to 13, **characterized in that** the position of the sealing surfaces (5a) of two sealing rings arranged spaced apart in the longitudinal direction of the piston rod (2) is controlled such that the pressure drop across one sealing ring (5) lies within a preset range of values.

15. Method in accordance with claim 14, **characterized in that** the position of the sealing surfaces (5a) is controlled in such a way that essentially the same pressure drop arises over each controllable sealing ring (5).

16. Dry running compressor comprising a piston rod sealing arrangement (1) in accordance with one of the claims 1 to 11 or operated in accordance with a method in accordance with one of the claims 12 to 15.

## Revendications

1. Dispositif d'étanchéité de tige de piston fonctionnant à sec (1) pour rendre étanche une tige de piston (2) montée mobile dans la direction longitudinale, comprenant au moins une bague d'étanchéité (5) avec une surface d'étanchéité (5a), un actionneur (7), un capteur (8) ainsi qu'une bague à chambre (3) à l'intérieur de laquelle la bague d'étanchéité (5) est disposée, l'actionneur (7) présentant une liaison active par rapport à la bague d'étanchéité (5), de sorte que la surface d'étanchéité (5a) est déplaçable radialement par rapport à la tige de piston (2), et l'actionneur (7) peut être commandé en fonction d'une valeur de mesure détectée par le capteur (8).

2. Dispositif d'étanchéité de tige de piston selon la revendication 1, **caractérisé en ce qu'**une pluralité de bagues à chambre (3) est disposée dans la direction longitudinale de la tige de piston (2), une bague d'étanchéité (5) et un actionneur (7) étant disposés à l'intérieur d'au moins deux bagues à chambre (3).

3. Dispositif d'étanchéité de tige de piston selon la revendication 1 ou 2, **caractérisé en ce que** la bague à chambre (3) présente une surface d'appui (3b, 3c) s'étendant perpendiculairement à la direction longitudinale de la tige de piston (2).

4. Dispositif d'étanchéité de tige de piston selon une des revendications précédentes, **caractérisé en ce que** la bague d'étanchéité (5) est réalisée sous la forme d'une bague d'étanchéité segmentée (5) comprenant une pluralité de segments de bague d'étanchéité (5b, 5c, 5d).

5. Dispositif d'étanchéité de tige de piston selon la revendication 4, **caractérisé en ce qu'**au moins un actionneur (7) séparé est associé à chaque segment de bague d'étanchéité (5a, 5b, 5c).

6. Dispositif d'étanchéité de tige de piston selon une des revendications 1 à 3, **caractérisé en ce que** la bague d'étanchéité (5) est réalisée d'une seule pièce.

7. Dispositif d'étanchéité de tige de piston selon la revendication 6, **caractérisé en ce qu'**un actionneur (7) annulaire ou tubulaire entoure la bague d'étanchéité (5) en direction circonférentielle.

8. Dispositif d'étanchéité de tige de piston selon une des revendications précédentes, **caractérisé en ce que** l'actionneur (7) est réalisé sous la forme d'un élément piézoélectrique ou magnétostrictif.

9. Dispositif d'étanchéité de tige de piston selon une des revendications 1 à 7, **caractérisé en ce que** l'actionneur (7) peut être entraîné au moyen d'un fluide.

10. Dispositif d'étanchéité de tige de piston selon une des revendications précédentes, **caractérisé en ce que** le capteur (8) est fixé sur la bague d'étanchéité (5).

11. Dispositif d'étanchéité de tige de piston selon une des revendications précédentes, **caractérisé en ce que** la surface d'étanchéité (5a) présente des rainures en labyrinthe.

12. Procédé pour rendre étanche une tige de piston (2) montée mobile dans la direction longitudinale avec un dispositif d'étanchéité de tige de piston (1) fonctionnant à sec comprenant une bague d'étanchéité (5) avec une surface d'étanchéité (5a), la position de la surface d'étanchéité (5a) par rapport à la tige de piston (2) étant modifiable de manière commandée en fonction d'une valeur de commande, la distance de la bague d'étanchéité (5) par rapport à la tige de piston (2) et/ou la température de la tige de piston (2) et/ou la pression différentielle entre deux bagues d'étanchéité (5) étant utilisées comme valeur de commande.

13. Procédé selon la revendication 12, **caractérisé en ce qu'**au moins deux et de préférence toutes les bagues d'étanchéité (5) sont commandées de façon que la position de leurs surfaces d'étanchéité (5a) par rapport à la tige de piston (2) soit modifiable.

14. Procédé selon une des revendications 12 à 13, **caractérisé en ce que** la position des surfaces d'étanchéité (5a) de deux bagues d'étanchéité (5) disposées à distance l'une de l'autre dans la direction longitudinale de la tige de piston (2) est commandée de façon que la chute de pression sur une bague d'étanchéité (5) se situe dans une plage de valeurs prédéfinie.

15. Procédé selon la revendication 14, **caractérisé en ce que** la position des surfaces d'étanchéité (5a) est commandée de façon qu'il se produise sensiblement la même chute de pression sur chaque bague d'étanchéité (5) commandable.

16. Compresseur fonctionnant à sec comprenant un dispositif d'étanchéité de tige de piston (1) selon une des revendications 1 à 11 ou fonctionnant avec un procédé selon une des revendications 12 à 15.
